Europäisches Patentamt

European Patent Office (11) Numéro de publication: **0 010 562**

Office européen des brevets **B1**

(12) **FASCICULE DE BREVET EUROPEEN**

(45) Date de publication du fascicule du brevet: **13.02.85**

(51) Int. Cl.⁴: **C 25 B 9/00,** C 25 B 3/02, C 02 F 1/46

(21) Numéro de dépôt: **78400147.1**

(22) Date de dépôt: **25.10.78**

(54) Procédé d'électrolyse.

(43) Date de publication de la demande:
**14.05.80 Bulletin 80/10**

(45) Mention de la délivrance du brevet:
**13.02.85 Bulletin 85/07**

(84) Etats contractants désignés:
**BE CH DE GB**

(56) Documents cités:
**FR-A-2 019 621**
**FR-A-2 295 138**
**FR-A-2 375 351**
**US-A-3 288 692**
**US-A-3 616 356**
**US-A-4 004 994**

(73) Titulaire: **SORAPEC Société de Recherches et d'Applications Electrochimiques**
**192 rue Carnot**
**F-94120 Fontenay-sous-Bois (FR)**

(72) Inventeur: **Doniat, Denis**
**14 rue des Marronniers**
**F-75016 Paris (FR)**

Courier Press, Leamington Spa, England.

EP 0010562 B1

## Description

L'invention concerne des cellules électrolytiques.

Conformément à l'invention, la présence d'un séparateur entre les compartiments anodiques et cathodiques a été rendue inutile. Il est mis en évidence que le séparateur poreux, contrairement à ce que montre la pratique courante, peut être avantageusement supprimé, ce qui autorise la circulation d'une électrode dispersée dans l'ensemble de la cellule électrolytique, et permet de supprimer les inconvénients qui résultent de la présence d'un séparateur.

L'électrode dispersée est formée par une suspension, dans l'électrolyte, de particules conductrices. Diverses dispositions de l'ensemble des éléments de la cellule sont proposées et notamment en ce qui concerne la circulation de l'électrode dispersée par rapport aux électrodes fixes.

Un tel procédé est utilisable pour toute cellule électrolytique, d'une manière générale pour toutes réactions d'oxydation ou de réduction et en particulier pour des réactions de synthèse, ou de destruction ou élimination de composés toxiques ou polluants contenus dans les effluents.

L'invention concerne les techniques qui mettent en oeuvre des réactions électrochimiques. Elle concerne plus précisément la conception d'un procédé et d'une cellule d'électrolyse pour la mise en oeuvre des réactions d'oxydo-réduction. Elle est susceptible de recevoir des applications aussi variées que le sont les nombreux usages des réactions électrochimiques, dans des industries diverses. Cependant, on se référera plus particulièrement dans ce qui suit à deux types d'applications privilégiées de l'ensemble selon l'invention que constituent les électrolyseurs destinés à la transformation des produits de base d'une synthèse électrochimique, et ceux utilisés pour l'élimination de composés toxiques ou polluants contenus dans les effluents.

La présente invention concerne un procédé et un dispositif d'électrolyse, résultant de l'observation faite que les réactions inverses se produisant au niveau des électrodes de chaque polarité, s'effectuent souvent à des cinétiques différentes, ceci étant applicable d'une manière générale à toutes réactions d'oxydation ou de réduction et autorisant la suppression du compartimentage de la cellule.

Jusqu'à présent, le souci d'éviter que celle des deux réactions inverses que l'on ne désire pas voir se produire n'anihile celle qui est recherchée, a conduit à séparer les électrodes par un diaphragme qui compartimente le bain électrolytique. Il est de pratique courante que les opérations d'électrolyse s'effectuent dans les électrolyseurs divisés en deux ou plusieurs compartiments, contenant respectivement chacune des électrodes de polarités opposées baignant dans un électrolyte, par un séparateur qui doit être à la fois suffisamment poreux pour être perméable aux ions qui assurent le passage du courant électrique d'un compartiment à l'autre, mais cependant capable d'opposer une barrière efficace aux réactifs ou produits des réactions électrochimiques formés dans chaque compartiment.

Cependant, un tel séparateur présente un certain nombre d'inconvénients; en particulier, et du fait de sa seule présence, le séparateur provoque une chute ohmique entre les électrodes, d'autant plus importante que l'électrolyseur fonctionne à de plus fortes densités de courant. L'invention a pour objectif de pallier ces inconvénients par la suppression du diaphragme poreux.

Selon l'invention la suppression du séparateur autorise l'utilisation d'une électrode dispersée circulant dans l'ensemble de l'électrolyte et á travers les électrodes fixes, et pouvant par conséquent se trouver au contact tant de la cathode que de l'anode fixes. La polarité de l'électrode dispersée est déterminée par le sens de la réaction dont la cinétique est la plus rapide.

La présence d'un telle électrode dispersée à pour objet d'améliorer les rendements de l'opération.

Le procédé de l'invention s'applique à tous les cas où chacun des constituants en solution se caractérise par des propriétés d'oxydo-réduction, telles que l'une des deux réactions, oxydation ou réduction, se produit avec une cinétique plus rapide que l'autre. En pareil cas, la solution électrolytique peut être mise en contact simultanément avec les électrodes positives et les électrodes négatives sans pour autant qu'il y ait à craindre que les réactions qui se produisent aux électrodes d'une polarite soient anihilées par celles se produisant aux électrodes de polarité inverse. Pour chacun des composés à transformer ou à éliminer, une seule réaction (soit une oxydation à l'électrode positive, soit une réduction à l'électrode négative) est en mesure de se produire avec une cinétique appréciable. Cet effet pourra être avantageusement amplifié, éventuellement, par le choix judicieux des surfaces relatives des électrodes de polarités opposées.

Un tel procédé est de nature à être utilisé de façon particulièrement avantageuse, soit dans le cadre d'opérations d'électrosynthèse, soit pour le traitement d'effluents.

Sa mise en oeuvre, ne nécessite pas l'interposition, entre les électrodes, de séparateur interdisant aux produits réactionnels cathodiques d'entrer en contact avec l'anode, et par suite et inversement, le procédé proposé conduit à une simplification de conception et de fonctionnement des cellules d'électrolyse. Ceci les rend, notamment, particulièrement aptes au traitement des effluents industriels dans leur circuit même d'évacuation.

On s'attachera, à titre d'exemple non limitatif d'application du procédé de l'invention à mettre en évidence les avantages de celui-ci par rapport aux méthodes et dispositifs habituels de traitement d'effluent, et à en décrire un schéma de principe n'ayant aucun caractère restrictif.

Dans la pratique habituelle, le traitement des effluents nécessite soit une élimination physique des composés toxiques ou polluants, soit leur transformation chimique de façon à les rendre inoffensifs.

Dans le premier cas il est fait appel soit à des résines échangeuses d'ions, soit à du charbon actif.

Dans le second cas, on utilise des produits chimiques à effet oxydant ou réducteur, destinées à transformer les polluants en corps facilement récupérables et séparables.

Ces deux types de traitement présentent un certain nombre d'inconvénients parmi lesquels:

— un prix de revient élevé du fait de l'utilisation de produits coûteux et d'importantes installations;
— la nécessité d'une maintenance permanente des installations par un personnel compétent;
— une réponse toujours imparfaite au problème de fonctionnement en continu;
— un rendement énergétique faible;
— une durée de traitement susceptible de provoquer un ralentissement du rythme de fonctionnement de l'unité de production.

La présente invention permet, dans le cas de son application au traitement des effluents, de pallier ces inconvénients par l'installation du dispositif de l'invention qu'il est possible d'adapter directement sur le circuit d'évacuation des rejets polluants.

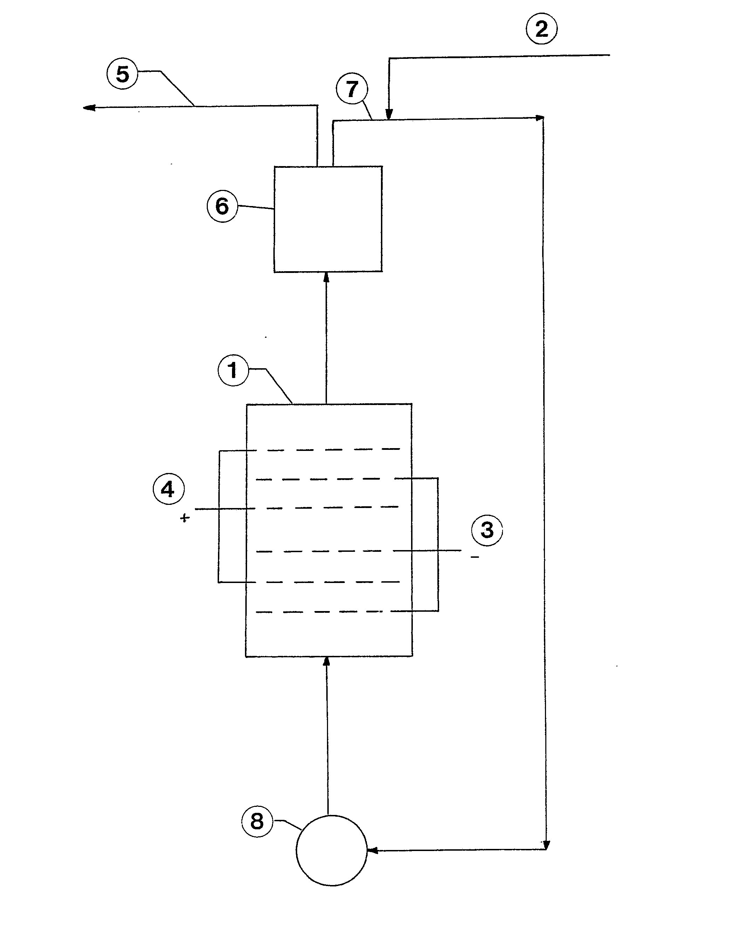

La figure unique propose un schéma d'application non limitative du procédé de l'invention au traitement des effluents.

La cuve d'électrolyse I est directement alimentée par le circuit d'évacuation des effluents en 2. Les cathodes et anodes 3 et 4 peuvent notamment, comme d'ailleurs dans le cas d'une cuve électrolytique destinée à des opérations de synthèse électrochimique, y être disposés de façon transversale au passage de l'effluent, au quel cas les électrodes fixes doivent être franchies par la suspension; les électrodes fixes peuvent, dans ce cas, se présenter sous divers aspects et notamment: des plaques percées de trous par lesquels s'effectue la migration obligatoire de la suspension; des grilles traversées de la même manière; un réseau de fils ou lamelles, tubes ou plaques. L'effluent purifié quitte le dispositif en 5, après passage à travers un filtre 6 pouvant être notamment un filtre rotatif, qui permet le récupération des particules de l'électrode dispersée en 7 en vue de leur réutilisation; leur réintroduction dans le circuit est réglée au moyen d'une pompe 8.

Tel qu'il est conçu et décrit, le procédé d'électrolyse qui fait l'objet du présent brevet se distingue donc fondamentalement des trois procédés connus par ses caractéristiques de principe, de mise en oeuvre et de fonctionnement:

— l'électrolyse réalisée au moyen de seules électrodes fixes sans présence d'électrode sous forme de particules;
— la technologie de l'électrode en lit fluidisé;
— la technologie de l'électrode en lit compacté ou lit fixe.

Ces deux derniers procédés, bien que faisant appel à une forme d'électrode en particules, interdisent la libre circulation de celle-ci dans l'ensemble du circuit, les particules étant caractérisées par leur faible conductivité, leur bipolarité et donc une résistance suffisante pour éviter tout court-circuit entre les électrodes fixes.

Naturellement, et comme il résulte d'ailleurs très largement de ce qui précède, l'invention n'est pas limitée aux modes de réalisation particuliers qui ont été décrits à titre d'exemple. En particulier, elle s'étend à l'application de tout autre procédé permettant de réaliser une réaction d'électrolyse en l'absence de séparateur entre les compartiments anodiques et cathodiques.

En définitive, l'invention ne se limite pas aux exemples qui viennent d'être donnés, mais en embrasse toutes les variantes.

**Revendications**

1. Procédé d'électrolyse destiné à transformer les composés en solution dans l'électrolyte en composés également solubles dans cet électrolyte, caractérisé par le fait que la solution électrolytique véhicule une électrode dispersée, formée de particules conductrices, libre de circuler dans l'ensemble du circuit d'électrolyse et traverse un électrolyseur et les électrodes fixes de celui-ci disposées transversalement à son passage, sans qu'aucun séparateur ne soit disposé entre les dites électrodes fixes de polarités opposées, la polarité de l'électrode dispersée étant déterminée par le sens de la réaction dont la cinétique est la plus rapide.

2. Procédé d'électrolyse selon la revendication 1, caractérisé en ce que les électrodes fixes de l'électrolyseur constituent une alternance régulière d'électrodes positives et d'électrodes négatives.

3. Procédé d'électrolyse selon la revendication 1, caractérisé en ce que les électrodes fixes sont percées de trous.

4. Procédé d'électrolyse selon la revendication 1, caractérisé en ce que les électrodes fixes se présentent sous l'aspect de grilles.

5. Procédé d'électrolyse selon la revendication 1 caractérisé en ce que les électrodes fixes se présentent sous l'aspect d'un réseau de fils.

6. Procédé d'électrolyse selon la revendication 1 caractérisé en ce que les électrodes fixes se présentent sous l'aspect d'un réseau de lamelles.

7. Procédé d'électrolyse selon la revendication 1 caractérisé en ce que les électrodes fixes se présentent sous l'aspect d'un réseau de tubes.

8. Procédé d'électrolyse selon la revendication 1, caractérisé en ce que la différence de cinétiques entre les deux réactions inverses d'électrolyse peut être accrue par un choix judicieux de surface et/ou des dispositions respectives des électrodes fixés de polarités opposées.

9. Procédé d'électrolyse destiné à transformer les composés en solution dans l'électrolyte en composés également solubles dans cet électrolyte par oxydation ou par réduction, caractérisé en ce que la solution électrolytique véhicule une électrode dispersée, formée de particules conductrices, libre de circuler dans l'ensemble du circuit d'électrolyse, et dont la polarité est déterminée par le sens de la réaction dont la cinétique est la plus rapide, et traverse un électrolyseur et ses électrodes, celles-ci formant une alternance régulière d'électrodes positives et d'électrodes négatives disposées transversalement à son passage se présentant sous la forme de grilles dont le rapport des surfaces respectives, selon leur polarité, est judicieusement choisi afin de rendre maximale la différence de cinétiques entre les deux réactions inverses d'électrolyse et l'électrolyseur ne comportant aucun séparateur.

10. Dispositif d'électrolyse destiné à transformer des composés en solution dans l'électrolyte en composés également solubles dans cet électrolyte par oxydation ou par réduction, caractérisé en ce que l'électrolyseur cylindrique ne comportant aucun séparateur comprend une alternance régulière d'électrodes fixes positives et négatives disposées transversalement et se présentant sous la forme de grilles, dont le rapport des surfaces respectives, selon leur polarité, est judicieusement choisi afin de rendre maximale la différence de cinétiques entre les deux réactions inverses d'électrolyse, l'électrolyseur et ses électrodes fixes étant traversés par la solution électrolytique et l'électrode dispersée qu'elle véhicule dans l'ensemble du circuit d'électrolyse.

**Patentansprüche**

1. Elektrolyseverfahren zur Umwandlung der Lösungsverbindungen im Elektrolyten in ebenfalls in diesem Elektrolyten auflösbare Verbindungen, gekennzeichnet dadurch, dass die elektrolytische Lösung eine aus Leitpartikeln bestehende im gesamten Elektrolysekreis frei umlaufende bewegliche Elektrode transportiert und einen Elektrolyser sowie seine quer zu ihrem Durchlauf angeordneten festen Elektroden durchströmt, ohne dass zwischen besagten festen Elektroden entgegengesetzter Polarität ein Abscheider angeordnet ist, wobei die Polarität der beweglichen Elektrode durch die Richtung der schnellsten Reaktion bestimmt wird.

2. Elektrolyseverfahren laut Patentanspruch 1, gekennzeichnet dadurch, dass die festen Elektroden des Elektrolysers eine regelmässige Wechselfolge positiver und negativer Elektroden bilden.

3. Elektrolyseverfahren laut Patentanspruch 1, gekennzeichnet dadurch, dass die festen Elektroden durchlöchert sind.

4. Elektrolyseverfahren laut Patentanspruch 1, gekennzeichnet durch eine gitterförmige Gestaltung der festen Elektroden.

5. Elektrolyseverfahren laut Patentanspruch 1, gekennzeichnet durch eine drahtnetzförmige Gestaltung der festen Elektroden.

6. Elektrolyseverfahren laut Patentanspruch 1, gekennzeichnet durch eine lamellennetzförmige Gestaltung der festen Elektroden.

7. Elektrolyseverfahren laut Patentanspruch 1, gekennzeichnet durch eine rohrnetzförmige Gestaltung der festen Elektroden.

8. Elektrolyseverfahren laut Patentanspruch 1, gekennzeichnet dadurch, dass der Geschwindigkeitsunterschied zwischen den beiden entgegengerichteten Elektrolysereaktionen durch einen sinnvolle Flächenwahl und/oder entsprechende Anordnung der festen Elektroden entgegengesetzter Polarität erhöht werden kann.

9. Elektrolyseverfahren zur Umwandlung der Lösungsverbindungen im Elektrolyten in ebenfalls in diesem Elektrolyten durch Oxydation oder Reduktion auflösbare Verbindungen, gekennzeichnet dadurch, dass die elektrolytische Lösung eine aus Leitpartikeln bestehende im Elektrolysekreis frei umlaufende bewegliche Elektrode transportiert, deren Polarität durch die Richtung der schnellsten Reaktion bestimmt wird, und einen Elektrolyser mit seine Elektroden durchläuft, welche eine regelmässige Wechselfolge quer zum Lösungsdurchlauf angeordneter positiver und negativer Elektroden in gitterförmige Gestaltung bilden, deren jeweiliges Flächenverhältnis entsprechend ihrer Polarität sinnvoll gewählt ist, um einen optimalen Geschwindigkeitsunterschied zwischen den beiden entgegengerichteten Elektrolysereaktionen und dem Elektrolyser ohne Abscheider zu erhalten.

10. Elektrolysegerät zur Umwandlung der Lösungsverbindungen im Elektrolyten in ebenfalls in diesem Elektrolyten durch Oxydation oder Reduktion auflösbare Verbindungen, gekennzeichnet dadurch, dass der zylindrische Elektrolyser ohne Abscheider eine regelmässige Wechselfolge quer angeordneter positiver und negativer fester Elektroden in gitterförmiger Gestaltung enthält, deren jeweiliges Flächenverhältnis entsprechend ihrer Polarität sinnvoll gewählt ist, um einen optimalen Geschwindigkeitsunterschied zwischen den beiden entgegengerichteten Elektrolysereaktionen zu erhalten, da der Elektrolyser und seine festen Elektroden von der elektrolytischen Lösung und der von ihr im gesamten Elektrolysekreis transportierten beweglichen Elektrode durchströmt wird.

## Claims

1. Electrolysis process designed to transform the compounds in solution in the electrolyte into other compounds also soluble in this same electrolyte. This process is characterized by the fact that the electrolytic solution carries a scattered electrode, made up of conducting particles and circulating freely in the electrolysis circuit. This scattered electrode goes through an electrolyser and its fixed electrodes which are mounted crosswise with respect to its flowing through. No separator is installed between the said fixed electrodes of opposite polarities, the polarity of the scattered electrode is determined by the direction of the reaction with the fastest kinetic characteristic.

2. Electrolysis process as per claim 1, characterized by the fact that the positive fixed electrodes of the electrolyser alternate with the negative ones.

3. Electrolysis process as per claim 1, characterized by the fact that some holes are drilled in the fixed electrodes.

4. Electrolysis process as per claim 1, characterized by the fact that the fixed electrodes are in the shape of grids.

5. Electrolysis process as per claim 1, characterized by the fact that the fixed electrodes are formed by a network of wires.

6. Electrolysis process as per claim 1, characterized by the fact that the fixed electrodes are formed by a network of laminations.

7. Electrolysis process as per claim 1, characterized by the fact that the fixed electrodes are in the form of a tubular network.

8. Electrolysis process as per claim 1, characterized by the fact that the kinetic difference between the two opposite electrolysis reactions can be increased by the judicious selection of the surface and/or the respective arrangements of the fixed electrodes of opposite polarities.

9. Electrolysis process designed to transform the compounds in solution in the electrolyte into other compounds also soluble in this same electrolyte, either by oxidation or by reduction. This process is characterized by the fact that the electrolytic solution carries a scattered electrode, made up of conducting particles and circulating freely in the whole electrolysis circuit. The polarity of this scattered electrode is determined by the direction of the reaction with the fastest kinetic characteristic. It goes through an electrolyser and its electrodes, the positive electrodes alternating with the negative ones, all of them being mounted crosswise with respect to the flow of the scattered electrode. The fixed electrodes are in the shape of grids, the ratio between their respective surfaces, according to their polarity, being judiciously selected in order to obtain the maximum kinetic difference between the two opposite electrolysis reactions. The electrolyser does not comprise any separator.

10. Electrolysis device designed to transform the compounds in solution in the electrolyte into other compounds also soluble in this same electrolyte, either by oxidation or by reduction. It is characterized by the use of a cylindrical electrolyser without separator and comprising regularly alternating fixed positive and negative electrodes mounted crosswise and shaped as grids. The ratio between the respective surfaces of these electrodes, according to their polarity, is judiciously selected so as to obtain the maximum kinetic difference between the two opposite electrolysis reactions, the electrolyser and its fixed electrodes being traversed by the electrolytic solution with the scattered electrode it carries through the whole electrolysis circuit.